# EUROPÄISCHE PATENTSCHRIFT

(11) **EP 1 272 750 B1**
(45) Veröffentlichungstag und Bekanntmachung des Hinweises auf die Patenterteilung: **26.09.2007**
(21) Anmeldenummer: 01945009.7
(22) Anmeldetag: 17.04.2001
(51) Int. Cl.: F02D 9/10, F16K 1/18

(54) **DROSSELKLAPPE**
BUTTERFLY VALVE
PAPILLON DES GAZ

(30) Priorität: 14.04.2000 DE 10018627
(43) Veröffentlichungstag der Anmeldung: 08.01.2003
(73) Patentinhaber: SAXONIA UMFORMTECHNIK GmbH, D-73037 Göppingen (DE); Döttling & Partner Beratungsgesellschaft mbH, 73066 Uhingen (DE)
(72) Erfinder: BALTENSPERGER, Roger, 73265 Dettingen (DE); BOGENSCHÜTZ, Uwe, 73730 Esslingen (DE)
(74) Vertreter: Alber, Norbert
(86) Internationale Anmeldenummer: PCT/EP2001/004343
(87) Internationale Veröffentlichungsnummer: WO 2001/079673

(56) Entgegenhaltungen:
- EP-A- 0 701 057
- EP-A- 0 900 930
- GB-A- 294 450
- GB-A- 1 374 187
- US-A- 2 124 995
- US-A- 3 570 510
- US-A- 4 308 894
- US-A- 5 692 470
- US-A- 5 813 380

## Beschreibung

Die Erfindung betrifft die Drosselklappen im Luft-Ansaugtrakt bzw. zwischen Ansaugtrakt und zuschaltbarem Zusatzvolumen eines Verbrennungsmotors.

Bei einem Verbrennungsmotor wird von der einströmenden bzw. vom Motor selbst eingesaugten Verbrennungsluft in aller Regel auch der zur Verbrennung benutzte Kraftstoff in zerstäubter Form mit angesaugt, weshalb über die Menge der einströmenden Verbrennungsluft auch die Menge des Kraftstoffs und damit die momentane Leistung des Verbrennungsmotors gesteuert wird.

Entsprechend genau muss die Ansteuerung der Drosselklappen, die über den freien Querschnitt die Menge der angesaugten Luft pro Zeiteinheit bedingt, und deren Öffnungs- und Schließfunktion sein.

Ferner ist es bekannt, durch Steuerung der Öffnung zwischen dem Ansaugtrakt und dem zusätzlichen Luftvolumen das Ansaugverhalten des Motors in definierter Weise zu optimieren.

In beiden Fällen werden in der Regel die Drosselklappen aller in einer Reihe liegenden Ansaugtrakte, also Zylinder, gemeinsam angesteuert, und sind deshalb auf einer gemeinsamen Drosselklappen-Welle befestigt.

Ferner ist es bisher bekannt, die einzelne Drosselklappe dadurch auszubilden, dass in dem Luft-Ansaug-Kanal, der meist einen kreisförmigen Querschnitt besitzt, die ebenfalls kreisförmige Verschlussplatte der Drosselklappe schwenkbar um eine quer verlaufende Achse gelagert ist.

Steht die Drosselklappe exakt quer, also im 90°-Winkel, zur Durchströmungsrichtung, ist theoretisch kein freier Querschnitt mehr vorhanden, und die Luftzufuhr unterbunden. Steht die Verschlussplatte dagegen parallel zur Durchflussrichtung, so ist der freie Querschnitt theoretisch fast übereinstimmend mit dem Querschnitt des Ansaug-Kanals.

In der Praxis ist es jedoch schwierig, nicht nur in diesen Endpositionen sondern auch in allen Zwischenpositionen, bei einem bestimmten Schrägstellungswinkel der Verschlussplatte einen freien Querschnitt zu erreichen, der mit dem dann vorhandenen freien Soll-Querschnitt tatsächlich übereinstimmt, aufgrund der Fertigungstoleranzen beim Querschnitt der Ansaug-Kanäle als auch der Außenumfänge der Verschlussplatten. Dabei muss auch bedacht werden, dass sich diese Abmessungen aufgrund der stark schwankenden Temperaturen auch im Bereich der Drosselklappen aufgrund der Betriebswärme des Verbrennungsmotors stark ändern, und zwar unterschiedlich stark ändern, können.

Diese Probleme machen es bisher notwendig, sowohl Ansaug-Kanal als auch Drosselklappe sehr genau zu fertigen und aus relativ hochwertigen Materialien herzustellen, wobei zusätzlich die Montage wegen der notwendigen Positionierung der Verschlussplatte im Inneren des Ansaug-Kanals erschwert ist.

Die GB 294 450 A beschreibt eine Drosselklappe für die Verwendung bei einer Anzeigevorrichtung, um ein Strömen oder Nichtströmen von Fluid in einem Kanal anzuzeigen. Diese Anzeigvorrichtung wird z.B. in Leitungen von automatischen Feuerlöschern verwendet. Die Drosselklappe zum Verschließen eines Kanals besteht dabei aus einem Auslegerarm und einer Verschlussplatte, die durch ein Kugelgelenk in alle Richtungen schwenkbar und somit taumelnd bezüglich dem Auslegerarm gelagert ist, wobei das Kugelgelenk eine Gelenkkugel umfasst, die an einem senkrecht zu dem Auslegerarm angeordneten und von diesem in Mündungsrichtung vorstehenden Stift angebracht ist. Diese an dem Stift befindliche Gelenkkugel sitzt wiederum unverlierbar in einer Ausnehmung in der Verschlussplatte.

Die EP-A-0 900 930 beschreibt eine Drosselklappe für die Verwendung bei Motoren zur Regulierung von Auspuffgasen, mit einem Auslegerarm sowie einer durch ein Kugelgelenk in alle Richtungen schwenkbar gelagerte Verschlussplatte, wobei das Kugelgelenk einen Gelenkkörper umfasst, der an einem distalen Ende des Auslegerarms angebracht ist. Dieser kegelförmige Gelenkkörper ist wiederum in einer Ausnehmung der Verschlussplatte auf einer Seite, die der zu verschließenden Mündung zugewandt ist, unverlierbar angeordnet.

Weiterhin ist aus der US-A-5 813 380 eine Drosselklappe mit einer Verschlussplatte bekannt, die um eine Welle drehbar gelagert ist, wobei sich die Welle durch eine Durchgangsöffnung erstreckt, die in der Ebene der Verschlussplatte liegt. Um den Verschleiß der drehbaren Lagerung möglichst gering zu halten, ist die Verschlussplatte gewichtsreduziert aus Kunststoff hergestellt.

Ausgehend vom Stand der Technik gemäß GB 294 450 A ist der Fachmann vor die objektive Aufgabe gestellt, eine Drosselklappe mit taumelnd gelagerter Verschlussplatte zur Verfügung zu stellen, bei der eine verbesserte Betriebsweise durch möglichst einfache und kostengünstige Maßnahmen erreicht wird.

Diese Aufgabe wird durch die Merkmale der Ansprüche 1 und 14 gelöst. Vorteilhafte Ausführungsformen ergeben sich aus den Unteransprüchen.

Gemäß der Erfindung wird eine Drosselklappe vorgeschlagen, bei der eine taumelnde Lagerung bzw. Schwenkbarkeit der Verschlussplatte bezüglich des Auslegerarms um alle diejenigen Achsen, die quer zur Lotrechten auf die Klappenebene verlaufen, dadurch erreicht wird, dass von der Rückseite der Verschlussplatte oder der Unterseite des Auslegerarms eine konvex geformte Erhebung aufragt, mit der die Verschlussplatte an der Unterseite des Auslegerarmes anliegt bzw. mit der der Auslegerarm an der Verschlussplatte anliegt.

Durch das Aufliegen der Drosselklappe auf der Stirnfläche des Luft-Ansaug-Kanals kann ein vollständiger Verschluss auch dann erzielt werden, wenn sich die Verschlussklappe oder das stirnseitige Ende des Luft-Ansaug-Kanals ungleichmäßig verformt. Darüber hinaus ist auch bei ungenauer Montage der Drosselklappe, d.h. der Positionierung der Schwenkachse des Auslegerarms bezüglich der Lage der Stirnfläche des Luft-Ansaug-Kanals, ein vollständiges Verschließen der Mündung des Kanals möglich.

Dadurch ist eine Herstellung mit wesentlich geringeren Toleranzen für beide Bauteile möglich, und zusätzlich können wegen der planen Auflage der Verschlussplatte auf der Stirnfläche des Kanals auch übliche elastische, dimensionsausgleichende Dichtungsmaterialien zwischen beiden Teilen eingesetzt werden.

Durch die Herstellung der Verschlussplatte der Drosselklappe aus Kunststoff werden einerseits die Herstellkosten reduziert und andererseits die bewegte Masse der gesamten Drosselklappe, die für eine schnelle und präzise Ansteuerung so gering wie möglich sein sollte.

Da die erfindungsgemäßen Drosselklappen ebenso wie die herkömmlichen Drosselklappen durch Schwenken einer Welle betätigt werden sollen, um den Einsatz an herkömmlichen Verbrennungsmotoren ohne allzu große Folge-Änderungen möglich zu machen, wird auch die erfindungsgemäße Drosselklappe mittels einer Drosselklappen-Welle verschwenkt.

Dabei wird jedoch eine Anordnung der Welle seitlich der Mündung, also bzgl. der Verschlussplatte der Drosselklappe auch seitlich der Verschlussplatte, gewählt, was die Lagerung und Montage der Welle erleichtert, und auch den freien Durchgang im geöffneten Zustand der Drosselklappe nicht behindert. Diese Vorteile werden erzielt durch eine von der Drosselklappen-Welle einseitig abstehende und auskragende Drosselklappe.

Auch bei der erfindungsgemäßen Lösung sind alle Drosselklappen, die wie die Zylinder in Reihe hintereinander angeordnet sind, an einer gemeinsamen Welle fixiert und werden gemeinsam angesteuert. Wenn notwendig, ist jedoch auch eine Einzelansteuerung möglich, wobei dann vorzugsweise an Stelle einer Welle, mit der die Drosselklappen fest verbunden sind, eine Achse benutzt wird, auf der die Drosselklappen einzeln verschwenkbar sind.

Um auch bei ungleichmäßigen, wärmebedingten Ausdehnungen, großen Fertigungstoleranzen etc. immer ein sicheres Schließen der Drosselklappe zu ermöglichen, besteht die Drosselklappe im Wesentlichen aus zwei gegeneinander begrenzt beweglichen Teilen: Das eigentliche Verschließen der Stirnseite wird durch die auf der Stirnseite auflegbare Verschlussplatte bewirkt, die in der Regel über eine weiche Dichtung auf dem stirnseitigen Rand des Ansaug-Kanales aufliegt, und ihrerseits am freien Ende eines von der Welle quer abragenden und mit der Welle fest verbundenen Armes beweglich befestigt ist.

Dabei sollen Relativbewegungen durch Verschwenken um alle diejenigen Achsen möglich sein, die parallel zur Klappenebene liegen.

Um eine solche schwimmende oder taumelnde Lagerung zu erreichen, liegen der Arm und die Verschlussplatte mittels einer an einem der beiden Teile ausgebildeten Erhebung gegeneinander an. Da der Arm ebenso wie die Welle vorzugsweise aus Metall, nämlich der Arm in Form eines Blechbiegeteiles, hergestellt ist, und hierfür der Einfachheit halber Blech mit gleichbleibender Dicke verwendet wird, wird die Erhebung und sonstige Konturierung aus Kostengründen an der aus Kunststoff bestehenden Verschlussplatte ausgebildet, die durch Spritzgießen hergestellt wird.

Die Positionierung von Verschlussplatte und dem Arm der Drosselklappe erfolgt über einen Zapfen, der an der Verschlussplatte ausgebildet ist und in eine entsprechende Vertiefung oder Durchbruch des Armes eingreift.

Der Arm wird zwischen der eigentlichen Verschlussplatte und einer Halteplatte fixiert, wobei Halteplatte und Verschlussplatte beide aus Kunststoff sind und durch Verschweißen, insbesondere mittels Laser-Schweißen, miteinander verbunden werden. Um dabei eine spielfreie Anpressung des Armes an die Erhebung, die in der Regel auf der Rückseite der Verschlussplatte ausgebildet ist, zu bewirken, ist auf der anderen Seite des Armes ein federndes Element, vorzugsweise ein Formkörper aus elastischem Material, beispielsweise ein O-Ring, zwischengelegt.

Der Zuschnitt für das Blechbiegeteil als Arm ist dabei so geformt, dass zum einen in der von der Welle wegweisenden Richtung der mittlere, verbindende Schenkel länger ist, also weiter auskragt, als die hiervon seitlich parallel zueinander abstrebenden Seitenschenkel.

Dadurch ist es möglich, dass dieses flach plattenförmig vorstehende Ende des ausschließlich mittleren Schenkels des Armes in einer ebenso flachen Tasche zwischen Halteplatte und Verschlussplatte Platz findet, in die es von der einzigen offenen Seite her hineinragt.

Zum anderen sind die Seitenschenkel so geformt, dass sie bzgl. der durch den mittleren Schenkel definierten Ebene beidseits auskragen, um mit ihren gabelförmigen rückwärtigen, also vom Ende abgewandten, Endbereichen, in der eine konkave Kontur entsprechend der Außenkontur der damit zu verschweißenden Drosselklappen-Welle ausgebildet ist, ein möglichst großer Anteil des Umfanges der Drosselklappen-Welle umgriffen werden kann.

### c) Ausführungsbeispiele

Eine Ausführungsform gemäß der Erfindung ist im folgenden anhand der Figuren beispielhaft näher beschrieben. Es zeigen:
- Fig. 1:: Eine bekannte Drosselklappen-Anordnung in perspektivischer Prinzipdarstellung,
- Fig. 2:: die erfindungsgemäße Anordnung in analoger Darstellung,
- Fig. 3a: eine einzelne Drosselklappe in Blickrichtung III in der geschlossenen Stellung,
- Fig. 3b: die Drosselklappe der Fig. 3a in geöffneter Stellung,
- Fig. 3c: eine Detailvergrößerung aus Fig. 3a bzw. 3b, welches die Halteplatte 9 zeigt,
- Fig. 4: die Drosselklappe der Fig. 3 in der Aufsicht IV und
- Fig. 5: die Drosselklappe der Fig. 3 und 4 in Blickrichtung V der Fig. 4.

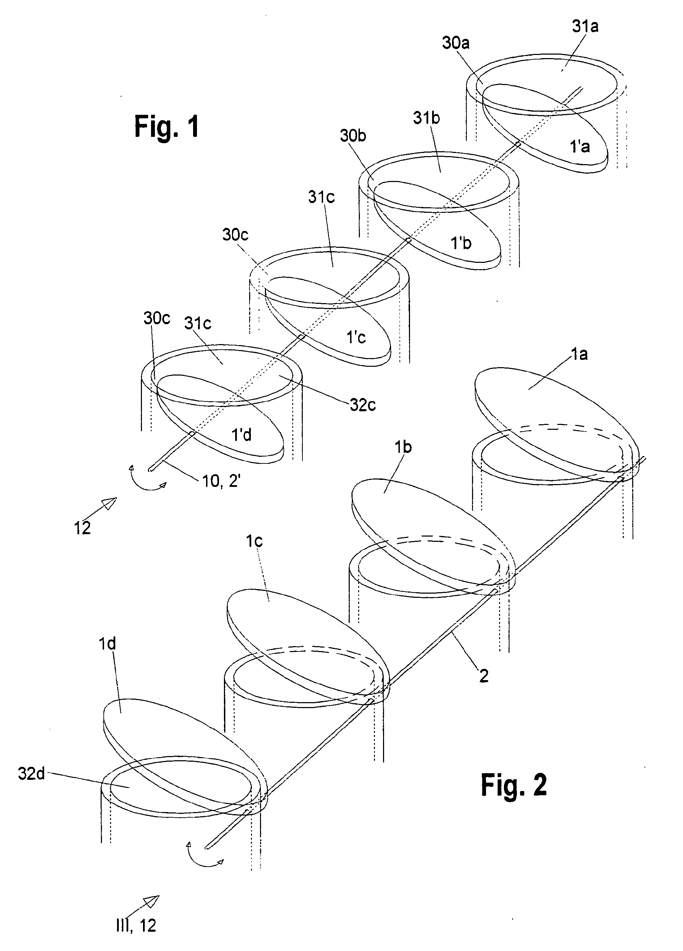

Fig. 1 zeigt eine Drosselklappen-Anordnung für einen üblichen Reihen-Vierzylinder-Verbrennungsmotor, bei dem auch die Luft-Ansaug-Kanäle 31 a, b, c, d in einer Reihe angeordnet sind, die jeweils runden Querschnitt aufweisen.

Von deren Mündungen 32a, b, c, d zurückversetzt ins Innere des Kanals 31 a, b, c,d ist dort jeweils eine Drosselklappe 1'a, b, c ,d angeordnet, deren Außenquerschnitt dem Innenquerschnitt des Kanals 31 entspricht. Die Drosselklappen 1'a, b, c, d sind auf einer gemeinsamen Drosselklappen-Welle 2' fixiert und können durch Drehen der Welle 2' verschwenkt werden, so dass der Grad der Querstellung verändert werden kann, und damit der zwischen Innenwandung des Kanals 31 und der schrägstehenden Drosselklappe 1' a, b, c, d freie Querschnitt 30'a, b, c, d übereinstimmend bei allen vier Kanälen 31 a, b, c, d durch Verschwenken der Welle 2' verändert werden kann.

Das Problem ist dabei einerseits die Montage der Drosselklappen 1'a, b, c im Inneren der Kanäle und gleichzeitig auf der mittig durch die Drosselklappen 1'a, b, c, d durchgehenden Welle 2'.

Ein weiteres Problem liegt in der exakten Abdichtung bei exakter Querstellung der Drosselklappen 1'a, b, c, d in den Kanälen 31'a, b, c, d.

Für die Zwecke der vorliegenden Erfindung wird die Verlaufsrichtung der Welle 2, die ja gleichzeitig die Richtung der Reihe 12 von Kanälen 31'a, b, c, d und damit auch der Drosselklappen 1'a, b, c, d ist, als Längsrichtung 10 definiert.

Fig. 2 zeigt in gleicher Ansicht die erfindungsgemäße Lösung, bei der im geschlossenen Zustand die Drosselklappen 1a, b, c, d jeweils auf einer der Mündungen 32a, b, c, d plan aufliegen, also die plane Stirnfläche der jeweiligen Mündung abdecken. Entsprechend sind die Drosselklappen 1 bei dieser Lösung auch größer als der innere Querschnitt des jeweiligen Kanals 31 a, b, c, ja sogar als der äußere Querschnitt, um eine sichere Abdeckung zu ermöglichen.

Die Drosselklappen-Welle 2 verläuft dabei seitlich entlang der Mündungen 32, also am Rand der damit verbundenen Drosselklappen 1 a, b, c, d entlang, so dass die Drosselklappen einseitig von der Welle 2 auskragen.

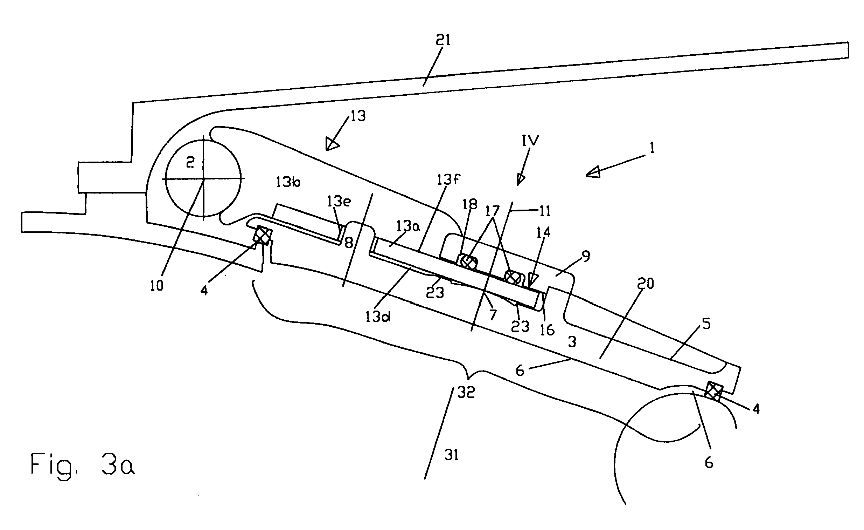

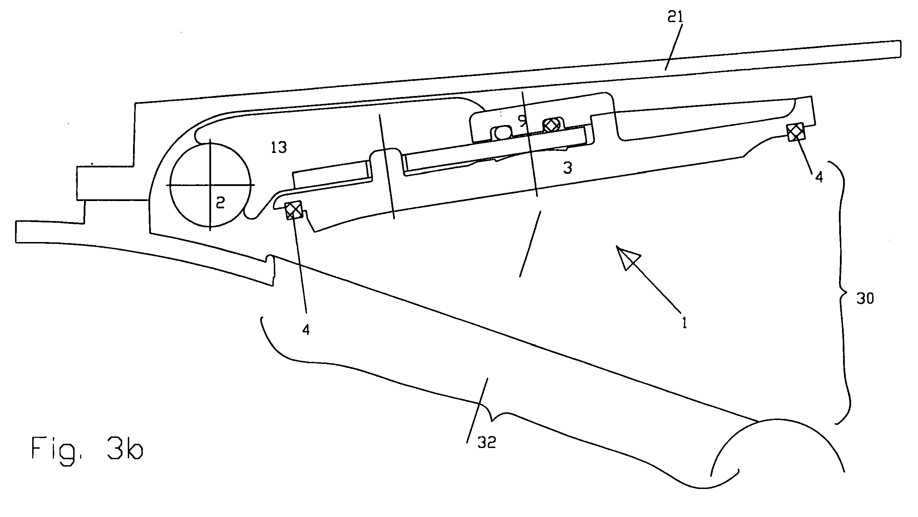

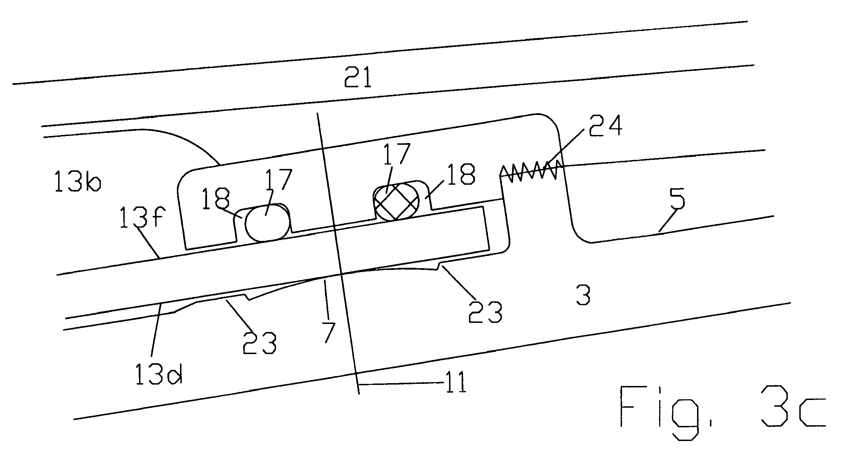

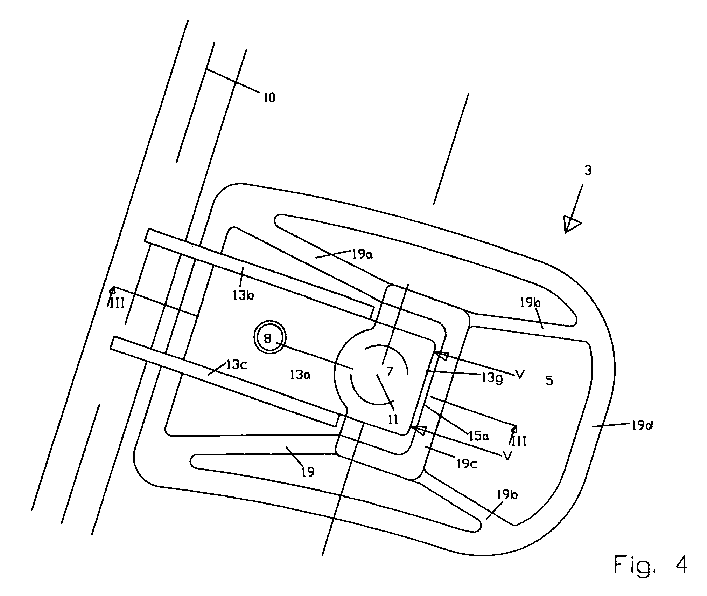

Eine einzelne Mündung 32 mit Drosselklappe 1 ist in den Fig. 3 und 4 dargestellt.

Zur Verbesserung der Übersichtlichkeit ist in Fig: 3b nur die Bezeichnung der Hauptteile untergebracht, in Fig. 3a dagegen alle weiteren verwendeten Bezugsziffern.

Wie die Schnittdarstellung, geschnitten lotrecht zur Längserstreckung der Drosselklappen-Welle 2 - also quer zur Längsrichtung 10 - zeigt, liegt im geschlossenen Zustand der Drosselklappe die Verschlussplatte 3, welche Bestandteil der Drosselklappe 1 ist, mit der in der Vorderseite 6 eingelassenen, ringförmig umlaufenden Dichtung 4 aus elastischem Material stirnseitig auf dem Rand der Mündung 32 des Luft-Ansaug-Kanales 31 an.

Verschwenkt man gegenüber diesem geschlossenen Zustand der Fig. 3a die Drosselklappen-Welle 2 entgegen dem Uhrzeigersinn um ca. 30°, so hebt die Drosselklappe 1 von der Mündung 32 ab.

Da sich die Welle 2 also Schwenkachse seitlich der Mündung 32 befindet, ist die Größe des freien Querschnittes 30 abhängig von der Stelle des Umfanges der Mündung 32.

In Blickrichtung der Erstreckung der Welle 2, also der Längsrichtung 10, steht im geöffneten Zustand die Drosselklappe 1 mit ihrer Verschlussplatte 3 schräg zur Stirnfläche der Mündung 32.

Die Drosselklappe 1 besteht im Wesentlichen nach der Montage aus zwei Einzelteilen: Einerseits der aus Kunststoff bestehenden Verschlussplatte 3, die den eigentlichen Schließvorgang durchführt, und andererseits aus dem an der Welle 2 drehfest befestigten und in der Regel aus dem gleichen Material wie die Welle 2, meist Metall, bestehenden Arm 13, der einseitig von der Welle 2 auskragt und an dessen freien Ende 14 die Verschlussplatte 3 mit ihrem mittleren Bereich an der Unterseite des Armes 13 befestigt ist.

Um auch bei thermischen Verwindungen etc. im geschlossenen Zustand der Drosselklappe, wie in Fig. 3a dargestellt, eine sichere Anlage der Verschlussplatte 3 über die Dichtung 4 an der Mündung 32 zu gewährleisten, ist eine Relativbewegbarkeit, also eine taumelnde Befestigung, der Verschlussplatte 3 an der Unterseite 13d des Armes 13 vorgesehen, wie am besten in der vergrößerten Darstellung der Fig. 3c zu erkennen:

Die als Lagerungspunkt, meist im mittleren Bereich, vorgesehene Stelle ist als ballige Erhebung 7 ausgebildet, welche über die übrige Rückseite 5 der Verschlussplatte 3 hinaus vorsteht. Mit dem höchsten Punkt der Erhebung 7 liegt die Verschlussplatte 3 an der Unterseite 13d des freien Endes 14 des Armes 13 an, und wird dort in Anlage gehalten durch einen auf die Rückseite 13f des Armes anpressende Halteplatte 9.

Die Halteplatte 9 liegt nicht direkt, sondern mittels eines elastischen Elements, nämlich eines liegenden O-Ringes 17, an dem Arm 13, insbesondere dessen mittleren Schenkel 13a, an.

Der O-Ring 17 ist in einer entsprechenden Ringnut 18 etwa konzentrisch um die durch die Erhebung 7 verlaufende Querrichtung 11, als die Lotrechte zur Hauptebene 20 der Drosselklappe 1, angeordnet, wobei der O-Ring unter Vorspannung am Arm 13 anliegt und über die Ringnut 18 hinaus vorsteht.

Um die Erhebung 7 herum ist wenigstens eine, insbesondere eine ringförmig umlaufende, Randerhebung 23 ausgebildet, die als Anschlag bei einer relativen Verkippung zwischen Verschlussplatte 3 und Arm 13 dient.

Eine formschlüssige Positionierung ist - wie in den Fig. 3a und 3b zu erkennen - durch einen Zapfen 8 gegeben, der von der Rückseite 5 der Verschlussplatte 3 aufragt und formschlüssig in einen Durchbruch 13e des mittleren Schenkels 13a des Armes 13 eingreift.

Ein radiales - bzgl. der Welle 2 betrachtet - Abziehen der Verschlussplatte 3 von dem Arm 13 ist daher nicht möglich, sobald nach der Montage die Verschlussplatte 3 von unten her so an den Arm 13 angesetzt wurde, dass der Zapfen 8, in der Regel mit rundem Querschnitt ausgestattet, in den Durchbruch 13e eingeschoben ist und über dem Ende 14 des Armes 13 die Halteplatte 9 auf der Rückseite 5 der Verschlussplatte 3 befestigt ist.

Die Halteplatte 9 wird dabei - wie am besten anhand der Aufsicht auf Fig. 4 zu erkennen ist - nicht auf den ebenen Teilen der Rückseite 5 der Verschlussplatte 3 befestigt, sondern auf Teilen der von der Rückseite 5 aufragenden Rippen 19a, b, c, die der Versteifung der Verschlussplatte dienen, und in Form eines H auf deren Rückseite angeordnet sind, zusätzlich zu einer umlaufenden Rippe 19d entlang des Randes.

Die etwa rechteckige Verschlussplatte 9 ist dabei so auf den mittleren Bereich des H der Rippen 19a, b, c aufgesetzt, dass eine an nur einer Seite offene, flache Tasche 19 verbleibt, in welcher der in der gleichen Ebene wie die Hauptebene 20 der Verschlussplatte 3 liegende mittlere Schenkel 13a des Armes 13 liegt.

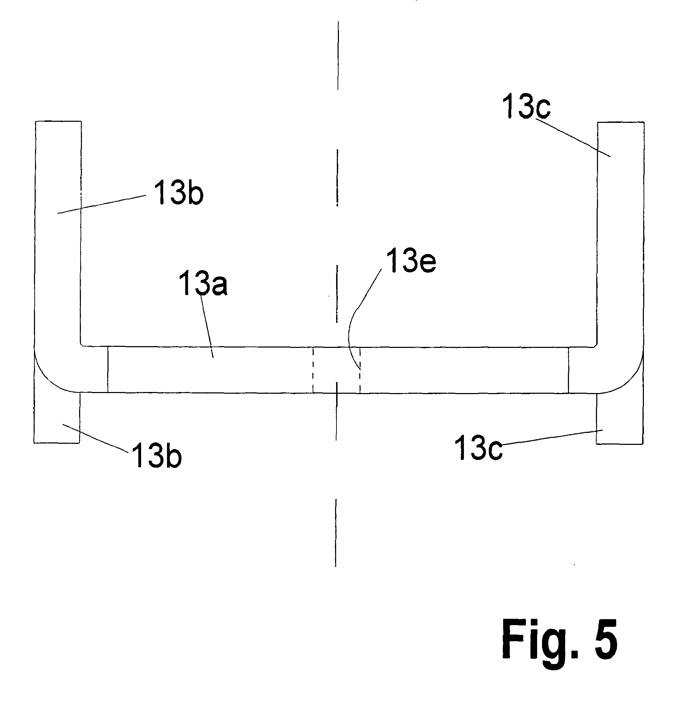

Der Arm 13 besitzt in der Ansicht gemäß Fig. 5, also quer zur Längsrichtung 10 betrachtet, die Form eines U, in dem beidseits von dem mittleren Schenkel 13a identische, parallel zueinander in die gleiche Richtung abstrebend verlaufende, Seitenschenkel 13b, c aufragen.

In Richtung auf das freie Ende 14 des Armes steht der mittlere Schenkel 13a weiter vor als die Seitenschenkel 13b, c, um dieses freie Ende 14 des nur noch mittleren Schenkels 13 a in der flachen Tasche unterbringen zu können.

In Gegenrichtung, also vom Ende 14 wegweisend, stehen die Seitenschenkel 13b, c weiter vor als der mittlere Schenkel 13a, und vor allem sind in der Seitenansicht die beiden Seitenschenkel 13b, c einerseits gabelförmig gestaltet und andererseits erstrecken sie sich beidseits der Ebene des mittleren Schenkels 13a.

Die gabelförmige Aufweitung besitzt eine Innenkontur entsprechend der Außenkontur der runden Welle 2, die in diese Innenkontur eingelegt und mit den Armen 13 verschweißt wird, wodurch eine sehr torsionssteife und dennoch leichte Grundstruktur, bestehend aus Welle 2 und daran angeschweißten metallenen, U-förmigen Armen 13 als Blechbiegeteile entsteht.

### BEZUGSZEICHENLISTE

- 1, 1': Drosselklappe
- 2, 2': Drosselklappen-Welle
- 3: Verschlussplatte
- 4: Dichtung
- 5: Rückseite
- 6: Vorderseite
- 7: Erhebung
- 8: Zapfen
- 9: Halteplatte
- 10: Längsrichtung
- 11: Lotrechte
- 12: Reihe
- 13: Arm
- 13a: mittlerer Schenkel
- 13b: Seitenschenkel
- 13c: Seitenschenkel
- 13d: Unterseite
- 13e: Durchbruch
- 13f: Rückseite
- 13g: Endkante
- 14: Ende
- 15: Tasche
- 16: Innenseite
- 17: O-Ring
- 18: Ringnut
- 19a,b,c,d: Rippen
- 20: Klappenebene
- 21: Abdeckplatte
- 22: Gehäuse
- 23: Randerhebungen
- 24: Schweißfläche
- 25:
- 30: freier Querschnitt
- 31: Kanal
- 32: Mündung

## Patentansprüche

1. Drosselklappe (1) zur Steuerung des freien Querschnitts (30) an der Mündung (32) eines Luft-Ansaug-Kanals (31) eines Verbrennungsmotors, aufweisend eine Verschlussplatte (3) mit einer der Mündung (32) zugewandten Vorderseite (6) und einer Rückseite (5), und einen Auslegerarm (13) zum schwenkbaren Befestigen der Drosselklappe, wobei die Verschlussplatte (3) an dem Auslegerarm (13) derart beweglich gelagert ist, dass die Verschlussplatte (3) bezüglich des Auslegerarmes (13) um all diejenigen Achsen verschwenkbar ist, die quer zur Lotrechten (11) auf die Klappenebene (20) verlaufen,
**dadurch gekennzeichnet, dass**
an der Rückseite (5) der Verschlussplatte (3) eine konvex geformte Erhebung (7) ausgebildet ist, mit der die Verschlussplatte (3) an der Unterseite (13d) des Auslegerarmes (13) anliegt, und die Verschlussplatte (3) aus Kunststoff hergestellt ist.

2. Drosselklappe (1) nach Anspruch 1,
**dadurch gekennzeichnet, dass**
sich die Erhebung in etwa im mittleren Bereich der Verschlussplatte (3) befindet.

3. Drosselklappe (1) nach Anspruch 1 oder 2,
**dadurch gekennzeichnet, dass**
die Erhebung ballig konvex ausgebildet ist.

4. Drosselklappe (1) nach einem der vorhergehenden Ansprüche,
**dadurch gekennzeichnet, dass**
in der Vorderseite (6) der Verschlussplatte (3) eine Dichtung (4) aus elastischem Kunststoffmaterial, insbesondere eine ringförmig umlaufende Dichtung (4), zur Auflage auf der Stirnfläche des Kanals (31) angeordnet ist.

5. Drosselklappe (1) nach Anspruch 4,
**dadurch gekennzeichnet, dass**
die Dichtung (4) in der Verschlussplatte (3) integriert, und insbesondere eingespritzt ist.

6. Drosselklappe (1) nach einem der vorhergehenden Ansprüche,
**dadurch gekennzeichnet, dass**
die Verschlussplatte (3) der Drosselklappe (1) im geschlossenen Zustand auf der Stirnfläche der Mündung (32) des Luft-Ansaug-Kanals (31) aufliegt und zum Öffnen des freien Querschnitts (30) aus der geschlossenen Lage heraus um eine Schwenkachse herum verschwenkbar ist.

7. Drosselklappe nach einem der vorhergehenden Ansprüche,
**dadurch gekennzeichnet, dass**
an einem von der Erhebung (7), insbesondere vom mittleren Bereich der Verschlussplatte (3), entfernten Punkt die Verschlussplatte (3) einen insbesondere integral angeformten Zapfen (8) aufweist, der von der Hauptebene (20) der Verschlussplatte (3) nach hinten, also von der Rückseite (5) weg, abstrebt und sich in eine hierfür vorgesehene Aussparung bzw. einen Durchbruch (13e) des Armes (13) hinein erstreckt.

8. Drosselklappe nach Anspruch 7,
**dadurch gekennzeichnet, dass**
der Durchbruch (13e) zwischen dem Ende (14) des Armes (13) und dessen Verbindung mit der Welle (2) angeordnet ist.

9. Drosselklappe nach einem der vorhergehenden Ansprüche,
**dadurch gekennzeichnet, dass**
an der Verschlussplatte (3) ein Haltearm angeordnet ist, der den Arm (13) auf seiner der Unterseite (13d) entgegengesetzten Rückseite (13f) hintergreift und **dadurch** den Arm in Anlage an der Rückseite (5) der Verschlussplatte (3), insbesondere deren Erhebung (7), hält.

10. Drosselklappe nach Anspruch 9,
**dadurch gekennzeichnet, dass**
der Haltearm als Halteplatte (9) ausgebildet ist und insbesondere entlang seines Umfanges ausgenommen auf der der Welle (2) zugewandten Seite fest mit der Verschlussplatte (3) verbunden, insbesondere verschweißt, ist und **dadurch** eine zur Welle (2) hin offene Tasche (15) zur Aufnahme des freien Endes (14) des Armes (13) gebildet ist.

11. Drosselklappe nach Anspruch 10,
**dadurch gekennzeichnet, dass**
in der Innenseite (16) der Halteplatte (9) elastisches Material unter Vorspannung zum spielfreien Anpressen des Armes (13) gegen die Erhebung (7) angeordnet ist, insbesondere in Form eines O-Ringes (17), der sich koaxial um den höchsten Punkt der Erhebung (7) herum ringförmig erstreckt und in einer entsprechenden Ringnut (18) der Innenseite (16) der Halteplatte (9) liegt.

12. Drosselklappe nach Anspruch 10 oder 11,
**dadurch gekennzeichnet, dass**
die Verschlussplatte (3) auf ihrer Rückseite zur Versteifung Rippen (19a, b, c, d) hat, von denen die Rippe (19d) eine entlang des Randes umlaufende Rippe ist und quer über die Rückseite (5) der Verschlussplatte (3) sich erstreckende Rippen (19a, b, c) teilweise als Auflagefläche für die Halteplatte (9) benutzt werden.

13. Drosselklappe nach einem der vorhergehenden Ansprüche,
**dadurch gekennzeichnet, dass**
beabstandet von der Erhebung (7), insbesondere umlaufend um die Erhebung (7) und im gleichen Abstand umlaufend wenigstens eine Randerhebung (23) von der Rückseite (5) der Verschlussplatte (3) aufragt, die die Verschwenkbarkeit zwischen Arm (13) und Verschlussplatte (3) relativ zueinander um den Berührungspunkt zwischen der Erhebung (7) und der Unterseite (13d) herum begrenzt.

14. Verbrennungsmotor mit einem einem Luft-Ansaug-Kanal (31) zuschaltbaren
Luftvolumen und einer Drosselklappe nach einem der vorhergehenden Ansprüche 1 bis 14 zwischen Luft-Ansaug-Kanal (31) und Zusatzvolumen.

15. Verbrennungsmotor nach Anspruch 14,
**dadurch gekennzeichnet, dass**
die Verschlussplatte (3) einseitig abstehend an einer Drosselklappen-Welle (2) angeordnet ist, die in Längsrichtung (10) entlang einer Reihe (12) von Brennkammern und deren zugeordneten Mündungen (32) von Luft-Ansaug-Kanälen (31) verläuft und insbesondere alle Drosselklappen (1a, b, c) einer Reihe (12) gemeinsam steuert.

16. Verbrennungsmotor nach Anspruch 15,
**dadurch gekennzeichnet, dass**
die Schwenkachse mit der Längsrichtung (10) übereinstimmt.

17. Verbrennungsmotor nach Anspruch 15 oder 16,
**dadurch gekennzeichnet, dass**
der Arm (13) und die Welle (2) aus Metall bestehen und insbesondere miteinander verschweißt sind, wobei insbesondere der Arm (13) als Blechbiegeteil aus Blech gleichbleibenden Querschnitts hergestellt ist.

18. Verbrennungsmotor nach einem der Ansprüche 15 bis 17,
**dadurch gekennzeichnet, dass**
der Drosselklappen-Arm in Blickrichtung senkrecht zur Längserstreckung der Welle (2) U-förmig gestaltet ist mit einem mittleren Schenkel (13a) und hiervon parallel zueinander in die gleiche Richtung abstrebenden Seitenschenkeln (13b, c), wobei sich der mittlere Schenkel (13a) quer zur Welle (2) weiter auskragt als die Seitenschenkel (13b, c) zwecks Hineinragen in die Tasche (15).

19. Verbrennungsmotor nach einem der Ansprüche 15 bis 18,
**dadurch gekennzeichnet, dass**
der mittlere Schenkel (13a) in Form einer parallel zur Längserstreckung der Welle (2) verlaufenden Endkante (13g) endet, und ebenso die Tasche (15) einen hierzu parallel verlaufenden Taschengrund (15a) aufweist, deren Abstand so gering wie möglich ist und das vorhandene Spiel der Relativdrehung um den Mittelpunkt des Zapfens (8) zwischen Verschlussplatte (3) und Arm (13) bestimmt.

20. Verbrennungsmotor nach einem der Ansprüche 15 bis 19,
**dadurch gekennzeichnet, dass**
die hinteren, vom freien Ende (14) abgewandten, Enden der Seitenschenkel (13b, c) gabelförmig mit einer kreisbogenförmigen Endkontur ausgebildet sind zur Anlage am Außenumfang des runden Querschnittes der Drosselklappen-Welle (2).

21. Verbrennungsmotor nach einem der Ansprüche 15 bis 20,
**dadurch gekennzeichnet, dass**
an dem Luftansaug-Kanal (31), insbesondere über die Reihe (12) von Kanälen (31) durchgehen, eine Abdeckplatte (21) am Gehäuse (22), in welchem die Kanäle (31) ausgebildet sind, angeordnet ist und sich frei auskragend vom Bereich der Anordnung der Welle (2) über die Drosselklappen (1) einziehen weg erstreckt, wodurch die maximal Öffnungsweite der Drosselklappen (1) begrenzt wird.

## Claims

1. A butterfly valve (1) for controlling the free section (30) at the orifice (32) of an air intake channel (31) of a combustion engine, comprising a closing plate (3) with a front face (6) facing the orifice (32) and a backside (5), and an extension arm (13) for pivotably mounting the butterfly valve, wherein the closing plate (3) is movably supported at the extension arm (13), so that the closing plate (3) is pivotable, relative to the extension arm (13) around all axes, extending transversal to the vertical (11) of the butterfly valve plane (20), wherein a convex bulge (7) is formed on the backside (5) of the closing plate (3), through which bump the closing plate (3) abuts to the bottom side (13d) of the extension arm (13), and the closing plate (3) is made from plastic.

2. A butterfly valve (1) according to claim 1, wherein
the bump is disposed approximately in the central section of the closing plate (3).

3. A butterfly valve (1) according to claim 1 or 2, wherein
the bump is provided spherical convex.

4. A butterfly valve (1) according to one of the preceding claims, wherein a seal (4), made from elastic plastic material, in particular an annular circumferential seal (4), is disposed in the front side (6) of the closing plate (3) for placement onto the front face of the channel (31).

5. A butterfly valve (1) according to claim 4, wherein
the seal (4) is integrated into the closing plate (3), in particular injected.

6. A butterfly valve (1) according to one of the preceding claims, wherein the closing plate (3) of the butterfly valve (1) rests on the front face of the orifice (32) of the air intake channel (31) in its closed state, and the closing plate (3) is pivotable around a pivot axis for opening the free cross section (30) from the closed position.

7. A butterfly valve (1) according to one of the preceding claims, wherein the closing plate (3) comprises a particularly integral pinion (8) at a point remote from the bulge (7), in particular from the center section of the closing plate (3), the pinion (8), protruding from the main plane (20) of the closing plate (3) towards the back, thus away from the backside (5), reaching into a cutout or an opening (13e) of the arm (13), provided for this purpose.

8. A butterfly valve (1) according to claim 7, wherein
the opening (13e) is disposed between the end (14) of the arm (13) and its connection with the shaft (2).

9. A butterfly valve (1) according to one of the preceding claims, wherein an extension arm is disposed at the closing plate (3), reaching behind the arm (13) at its backside (13f), opposite to the lower side (13d), thereby holding the arm in contact with the backside (5) of the closing plate (3), in particular with its bump (7).

10. A butterfly valve (1) according to claim 9, wherein
the holder arm is provided as holder plate (9), and connected with the closing plate (3) in a solid manner, in particular welded, in particular along its circumference, besides its side facing the shaft (2), and a pocket (15) open towards the shaft (2) is thereby provided for receiving the free end (14) of the arm (13).

11. A butterfly valve (1) according claim 10, wherein
elastic material is disposed in the inner side (16) of the holder plate (9) under a preload for pressing the arm (13) against the bump (7) without clearance, the elastic material is provided in particular shaped as an O-ring (7), extending in a coaxial manner around the highest point of the bump (7) in an annular manner, disposed in a respective annular groove (18) of the inner side (16) of the holder plate (9).

12. A butterfly valve (1) according to claim 10 or 11, wherein
the closing plate (3) has reinforcement ribs (19a, b, c, d) on its backside, wherein the rib (19d) is a rib extending along the rim, and ribs (19a, b, c) extending transversal along the backside (5) of the closing plate (3) are being partially used as contact surface for the holder plate (9).

13. A butterfly valve (1) according to one of the preceding claims, wherein at least one peripheral bump (23) protrudes from the backside (5) of the closing plate (3), offset from the bump (7), in particular circumferential around the bump (7), and circumferential at a constant distance, limiting the pivoting range between the arm (13) and the closing plate (3) relative to each other, around the contact point between the bump (7) and the bottom side (13d).

14. A combustion engine with an air volume that can be added to an air intake channel (31), and a butterfly valve according to one of the preceding claims 1 through 13, between the air intake channel (31) and the additional volume.

15. A combustion engine according to claim 14, wherein
the closing plate (3) is disposed on a butterfly valve shaft (2), protruding on one side, wherein the butterfly shaft (2) extends in longitudinal direction (10) along a row (12) of combustion chambers and their associated orifices (32) of air intake channels (31), jointly controlling in particular all butterfly valves (1a, b, c) of a row (12).

16. A combustion engine according to claim 15, wherein
the pivot axis coincides with the longitudinal direction (10).

17. A combustion engine according to claim 15 or 16, wherein
the arm (13) and the shaft (2) are made from metal and are in particular welded together, wherein in particular the arm (13) is manufactured as a formed sheet metal part from sheet metal with constant cross section.

18. A combustion engine according to one of the claims 15 through 17, wherein
the butterfly valve arm is provided U-shaped in the viewing direction perpendicular to the longitudinal extension of the shaft (2), with a middle arm (13a), and side arms (13b, c), protruding from there in the same direction, and parallel to each other, wherein the middle arm (13a) reaches out further, transversal to the shaft (2), than the side arms (13b, c), for reaching into the pocket (15).

19. A combustion engine according to one of the claims 15 through 18, wherein
the middle arm (13a) ends as a outer edge (13g), extending in parallel to the longitudinal extension of the shaft (2), and the pocket (15) also has a pocket bottom (15a) parallel to it, whose offset is as small as possible, determining the clearance of the relative rotation around the center of the pinion (8) between the cover plate (3) and the arm (13).

20. A combustion engine according to one of the claims 15 through 19, wherein
the rear ends of the side arms (13b, c), facing away from the free end (14) are provided fork shaped with an end contour formed as a circular arc for contacting abutment to the outer circumference of the round cross section of the butterfly valve shaft (2).

21. A combustion engine according to one of the claims 15 through 20, wherein
a cover plate (21) is disposed at the housing (22), wherein the channels (31) are formed, at the air intake channel (31), in particular extending over the row (12) of channels (31), extending unsupported from the area of the shaft (2) over the butterfly valves (1), limiting the maximum opening width of the butterfly valves (1).

## Revendications

1. Clapet d'étranglement (1) pour la commande de la section transversale libre (30) à l'embouchure (32) du canal d'aspiration d'air (31) d'un moteur à combustion, présentant une plaque de fermeture (3) avec une face avant (6) tournée vers l'embouchure (32), et une face arrière (5), et un bras formant flèche (13) pour la fixation pivotante du clapet d'étranglement, la plaque de fermeture (3) étant logée mobile sur le bras télescopique (13) de sorte que la plaque de fermeture (3) est pivotante par rapport au bras (13) autour de tous les axes qui s'étendent transversalement à la verticale (11) sur le plan de clapet (20),
**caractérisé en ce que**
sur la face arrière (5) de la plaque de fermeture (3), il est ménagé une élévation de forme convexe (7) avec laquelle s'applique la plaque de fermeture (3) contre la face inférieure (13d) du bras formant flèche (13) et la plaque de fermeture (3) est fabriquée en matière plastique.

2. Clapet d'étranglement (1) selon la revendication 1, **caractérisé en ce que** l'élévation se trouve approximativement dans la zone médiane de la plaque de fermeture (3).

3. Clapet d'étranglement (1) selon la revendication 1 ou 2, **caractérisé en ce que** l'élévation est de forme bombée.

4. Clapet d'étranglement (1) selon l'une des revendications précédentes, **caractérisé en ce qu'**une garniture d'étanchéité (4) en matériau élastique synthétique, en particulier une garniture d'étanchéité (4) annulaire et circulaire est disposée dans la face avant (6) de la plaque de fermeture (3) pour venir s'appliquer contre la surface frontale du canal (31).

5. Clapet d'étranglement (1) selon la revendication 4, **caractérisé en ce que** la garniture d'étanchéité (4) est intégrée dans la plaque de fermeture (3) et en particulier moulée par injection.

6. Clapet d'étranglement (1) selon l'une des revendications précédentes, **caractérisé en ce que** la plaque de fermeture (3) du clapet d'étranglement (1) s'applique à l'état fermé sur la surface frontale de l'embouchure (32) du canal d'aspiration d'air (31) et est pivotante autour d'un axe de pivotement pour sortir de la position fermée afin d'ouvrir la section transversale libre (30).

7. Clapet d'étranglement selon l'une des revendications précédentes, **caractérisé en ce que** sur un point éloigné de l'élévation (7), en particulier de la zone médiane de la plaque de fermeture (3), la plaque de fermeture (3) présente un pivot (6) moulé particulièrement intégralement qui fait saillie du plan principal (20) de la plaque de fermeture (3) vers l'arrière donc en s'éloignant de la face arrière (5) et s'étend dans un évidement prévu à cet effet, respectivement une percée (13e) du bras (13).

8. Clapet d'étranglement (1) selon la revendication 7, **caractérisé en ce que** la percée (13e) est disposée entre l'extrémité (14) du bras (13) et sa connexion avec l'arbre (2).

9. Clapet d'étranglement (1) selon l'une des revendications précédentes, **caractérisé en ce que** sur la plaque de fermeture (3) est disposé un bras de retenue qui appréhende par l'arrière le bras (13) sur sa face arrière (13f) opposée à la face inférieure (13d) et maintient ainsi le bras en application contre la face arrière (5) de la plaque de fermeture (3).

10. Clapet d'étranglement selon la revendication 9, **caractérisé en ce que** le bras de retenue est réalisé comme une plaque de retenue (9) et, en particulier sauf le long de sa périphérie, est reliée, en particulier soudée, sur la face tournée vers l'arbre (2), fixement à la plaque de fermeture (3) et forme ainsi une poche (15) ouverte en direction de l'arbre (2) pour le logement de l'extrémité libre (14) du bras (13).

11. Clapet d'étranglement selon la revendication 10, **caractérisé en ce que** dans la face interne (16) de la plaque de retenue (9) est disposé un matériau élastique sous précontrainte pour une application sans jeu du bras (13) contre l'élévation (7), en particulier sous forme d'un joint torique (17) qui s'étend coaxialement en forme d'anneau autour du point le plus élevé de l'élévation (7) et qui se trouve dans une rainure annulaire (18) correspondante de la face interne (16) de la plaque de retenue (9).

12. Clapet d'étranglement selon la revendication 10, **caractérisé en ce que** la plaque de fermeture (3) présente sur sa face arrière des rainures raidisseuses (19a, b, c, d) dont la rainure (19d) est une rainure circulaire le long du bord et des rainures (19a, b, c) s'étendant transversalement sur la face arrière (5) de la plaque de fermeture (3) sont utilisées partiellement comme surface d'application pour la plaque de retenue (9).

13. Clapet d'étranglement selon l'une des revendications précédentes, **caractérisé en ce qu'**à distance de l'élévation (7), et ce à même distance, en particulier tout autour de l'élévation (7), au moins une élévation de bordure (23) fait saillie de la face arrière (5) de la plaque de fermeture (3) qui limite le pivotement entre le bras (13) et la plaque de fermeture (3) de manière relative entre eux autour du point de contact entre l'élévation (7) et la face inférieure (13d).

14. Moteur à combustion avec un volume d'air applicable à un canal d'aspiration d'air (31) et un clapet d'étranglement selon l'une des revendications précédentes 1 à 14, entre le canal d'aspiration d'air (31) et un
volume supplémentaire.

15. Moteur à combustion selon la revendication 14, **caractérisé en ce que** la plaque de fermeture (3) est disposée, en faisant saillie sur un côté, sur un arbre de clapet d'étranglement (2) qui s'étend dans la direction longitudinale (10) le long d'une rangée (12) de chambres de combustion et de leurs embouchures associées (32) de canaux d'aspiration d'air (31) et commande en particulier en commun tous les clapets d'étranglement (1 a, b, c) d'une rangée (12).

16. Moteur à combustion selon la revendication 15, **caractérisé en ce que** l'axe de pivotement correspond à la direction longitudinale (10).

17. Moteur à combustion selon la revendication 15 ou 16, **caractérisé en ce que** le bras (13) et l'arbre (2) se composent de métal et sont soudés en particulier entre eux, en particulier le bras (13) étant fabriqué comme pièce pliée en tôle de section transversale constante.

18. Moteur à combustion selon l'une des revendications 15 à 17, **caractérisé en ce que** le bras de clapet d'étranglement présente la forme d'un U dans le sens du regard perpendiculairement à l'extension longitudinale de l'arbre (2) avec une branche médiane (13a) et des branches latérales (13b, c) faisant saillie dans la même direction parallèlement entre elles, la branche médiane (13a) faisant saillie plus loin transversalement à l'arbre (2) que les branches latérales (13b, c) afin de s'engager dans la poche (15).

19. Moteur à combustion selon l'une des revendications 15 à 18, **caractérisé en ce que** la branche médiane (13a) se termine sous forme d'un bord d'extrémité (13g) s'étendant parallèlement à l'extension longitudinale de l'arbre (2) et de même la poche (15) présente un fond de poche (15a) s'étendant parallèlement dont la distance est aussi faible que possible et définit le jeu existant de la rotation relative autour du point central du pivot (8) entre la plaque de fermeture (3) et le bras (13).

20. Moteur à combustion selon l'une des revendications 15 à 19, **caractérisé en ce que** les extrémités arrière des branches latérales (13b, c), détournées de l'extrémité libre (14), sont en forme de fourche avec un contour d'extrémité en forme d'arc de cercle pour l'application contre la périphérie externe de la section transversale ronde de l'arbre de clapet d'étranglement (2).

21. Moteur à combustion selon l'une des revendications 15 à 20, **caractérisé en ce que** sur le canal d'aspiration d'air (31), en particulier en continu au-dessus de la rangée (12) de canaux (31), est disposée une plaque de recouvrement (21) sur le coffret (22), dans lequel sont ménagés les canaux (31), plaque qui s'étend librement en s'éloignant en porte à faux de la zone de la disposition de l'arbre (3) au-dessus des clapets d'étranglement (1), la largeur d'ouverture maximale des clapets d'étranglement (1) étant ainsi limitée.
